# EUROPÄISCHE PATENTSCHRIFT

(11) **EP 0 702 248 B1**
(45) Veröffentlichungstag und Bekanntmachung des Hinweises auf die Patenterteilung: **05.12.2001**
(21) Anmeldenummer: 95114094.6
(22) Anmeldetag: 08.09.1995
(51) Int. Cl.: G01V 3/08, A01F 29/16

(54) **Metalldetektor zum Erkennen metallischer Fremdkörper**
Metaldetector for recognising metallic foreign objects
Détecteur de métal pour la reconnaissance de corps étrangers métalliques

(30) Priorität: 16.09.1994 US 311161
(43) Veröffentlichungstag der Anmeldung: 20.03.1996
(73) Patentinhaber: DEERE & COMPANY, Moline, Illinois 61265-8098 (US)
(72) Erfinder: Johnson, Stanley Jerome, Cedar Falls, Iowa 50613 (US)
(74) Vertreter: Magin, Ludwig Bernhard

(56) Entgegenhaltungen:
- DE-A- 3 511 355
- US-A- 3 757 501
- US-A- 3 889 249
- US-A- 4 805 266

## Beschreibung

Die Erfindung betrifft einen Metalldetektor zur Erkennung metallischer Fremdkörper im Durchflußmaterial, das insbesondere durch rotierende Maschinenelemente einer Erntemaschine gefördert wird, gemäß den Merkmalen des Oberbegriffs des Patentanspruchs 1.

Eine derartige Vorrichtung geht aus der US-A-4,805,266 hervor, die der Erfassung von Fremdkörpern, wie beispielsweise Metallteilen oder Drähten, in einem sich bewegenden Textilflockenfließ dient. Die Vorrichtung enthält eine Mehrzahl von über die Breite des Textilflockenfließes nebeneinander angeordneten Sensoren, die als unabhängige induktive Schalter, Spulen oder dgl. ausgebildet sein können und es ermöglichen, den Ort eines Metallteils über der Arbeitsbreite festzustellen. Die Sensoren arbeiten mit unterschiedlichen Frequenzen und sollen auf sich bewegende Metallteile ansprechen. Die beschriebene Vorrichtung ist störsignalanfällig, reagiert relativ unempfindlich und ist damit nicht für Anwendungsfälle, wie sie beispielsweise bei Erntemaschinen auftreten, geeignet.

Es ist bekannt, durch die Verwendung von Detektoren, die aus Magneten und Spulen bestehen, Metallteile im Erntegut eines Feldhäckslers aufzuspüren, um die Häckseltrommel vor Beschädigungen zu schützen und zu verhindern, daß das Vieh die Metallteile verschlingt. Wenn Metall den Abtastbereich des Sensors überquert, stoppt der Detektor die Rotation der Speisewalzen oder Zuführrollen, um zu verhindern, daß das Erntegut mit dem Metall die Häckseltrommel erreicht. Beispielsweise zeigt die US-A-3 972 156 einen Metalldetektor für einen Feldhäcksler mit einem einzigen Leiter, der zu einer Spule mit Achterfigur aufgewickelt ist. Derartige Spulen können jedoch versagen, wenn das Metall die Mitte der Magnet- und Spulenanordnung überquert. Durch die US-A-3 757 501 und die US-A-3 889 249 sind Metalldetektoren für Feldhäcksler bekannt geworden, die zwei separate, zueinander versetzte Spulen mit Achterfigur verwenden, die jeweils durch separate Leiter gebildet sind. Derartige Zweispulenanordnungen sind teuer, weil sie mehr Draht als Einzelspulenanordnungen erfordern und weil eine Verdoppelung der elektronischen Kreise erforderlich ist. Diese bekannten Anordnungen leiden unter einer verminderten Empfindlichkeit hinsichtlich solchen Metalls, das die Zuführrollen außerhalb der äußeren Enden der Detektoreinheit durchquert.

Ein Metallerkennungssensor mit nur einer Drahtspule ist sehr anfällig gegen magnetische Streufelder, wie sie beispielsweise von Überlandstarkstromleitungen ausgehen. Aus diesem Grund wurden die ersten erfolgreichen Metalldetektorsensoren mit zwei Spulen ausgebildet. Die Spulen wurden so verdrahtet, daß die Spannungen eines gleichförmigen Feldes sich gegenseitig aufheben. Die Verwendung von in gegenläufiger Art miteinander verbundener Spulen verursacht jedoch ein anderes Problem. Metall, daß den Sensor an einer die beiden Spulen halbierenden Linie überquert, induziert eine gleiche Spannung in beiden Spulen. Diese übereinstimmenden Spannungen löschen sich gegenseitig aus und hinterlassen kein Signal, das den Metalldetektor aktivieren könnte. Ein Metalldetektorsystem vermeidet dieses Problem durch Verwendung von vier Spulen und zwei Sätzen von Verstärkern. Diese Lösung ist teuer und erfordert aufeinander angepaßte Verstärker, um zu vermeiden, daß das System in einem Überwachungsbereich empfindlicher reagiert als in anderen Bereichen.

In der EP-A-0 546 509 wird ein Metallerkennungssystem mit drei Spulen beschrieben. Alle drei Spulen sind in Reihe geschaltet. Dieses System scheint im mittleren Bereich eine höhere Empfindlichkeit aufzuweisen als in seinen Endbereichen. Es ist jedoch wünschenswert einen Metalldetektor mit einer im wesentlichen gleichförmigen Empfindlichkeit zu haben.

In einem Metalldetektorsystem mit mehreren Spulen ist es für die Bedienungsperson wünschenswert zu wissen, welche der Spulen durch das auslösende Metall überquert wird. Hierdurch könnte die Bedienungsperson leichter das Metallteil lokalisieren und aus den Zuführrollen entfernen.

Die der Erfindung zugrunde liegende Aufgabe wird darin gesehen, einen mehrspuligen Metalldetektor der eingangs genannten Art anzugeben, der die Bedienungsperson darüber informiert, welche Spule von einem auslösenden Metallstück überquert wird. Der Metalldetektor soll eine im wesentlichen gleichförmig Empfindlichkeit aufweisen, relativ unempfindlich gegenüber magnetischen Streufeldern sein und sich kostengünstig herstellen Lassen. Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Der erfindungsgemäße Metalldetektor weist vorzugsweise drei Magnet-Spulen-Einheiten auf, die nebeneinander aufgereiht sind. Jede Magnet-Spulen-Einheit hat einen im wesentlichen rechteckigen Spulenkörper, der eine separate Spule und an sich gegenüberliegenden Endseiten jeweils einen von zwei zueinander beabstandeten Stabmagneten trägt. Die drei Spulen sind nach Art einer Dreiphasen-Sternschaltung elektrisch miteinander verbunden. Jede der durch die drei Spulen erzeugte Spannung wird durch eine mikroprozessorunterstützte Signalverarbeitungseinheit empfangen. Die Signalverarbeitungseinheit erzeugt drei Differenzspannungen V(x-y), V(y-z) und V(z-x), die den Differenzen zwischen jeweils zwei der drei einzelnen Spulenspannungen entsprechen. Die Signalverarbeitungseinheit erzeugt ein Summensignal, welches der Summe der Absolutwerte aller Differenzspannungen entspricht. Sie erzeugt ferner ein Betätigungs- oder Auslösesignal, wenn das Summensignal größer als ein Schwellwert ist. Die Signalverarbeitungseinheit bestimmt, welche Seite der Spulenanordnung von einem Metallstück überquert wird, indem es die Differenzsignale, die der Differenz zwischen den Spannungen der an den gegenüberliegenden Enden der Spulenanordnung liegenden Spulen entspricht, mit einem Schwellwert vergleicht. Die Signalverarbeitungseinheit bestimmt ferner die Lage des Metallstücks noch genauer, indem sie die einzelnen Differenzsignale miteinander vergleicht.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die perspektivische Ansicht eines Feldhäckslers bei welchem die vorliegende Erfindung Anwendung finden kann,
- Fig. 2: die Vorderansicht eines Feldhäckslers mit Zuführrollen in deren Bereich die vorliegende Erfindung eingesetzt werden soll,
- Fig. 3: eine Explosionsdarstellung, die den Einbau des erfindungsgemäßen Metalldetektors innerhalb einer Zuführrolle darstellt,
- Fig. 4: die perspektivische Darstellung einer Spulenbaugruppe des erfindungsgemäßen Metalldetektors bei der das äußere Gehäuse und das Eingußmaterial aus Gründen der Klarheit weggelassen wurde,
- Fig. 5: eine schematische Aufsicht der Spulenbaugruppe des erfindungsgemäßen Metalldetektors,
- Fig. 6: ein vereinfachtes schematisches Blockdiagramm mit Spulen und einer elektronischen Steuerung gemäß der Erfindung,
- Fig. 7: ein schematisches Blockdiagramm der Signalverarbeitungseinheit der vorliegenden Erfindung,
- Fig. 8a und 8b: das logische Flußdiagramm eines Algorithmus, der durch einen Mikroprozessor der Signalverarbeitungseinheit ausgeführt wird.

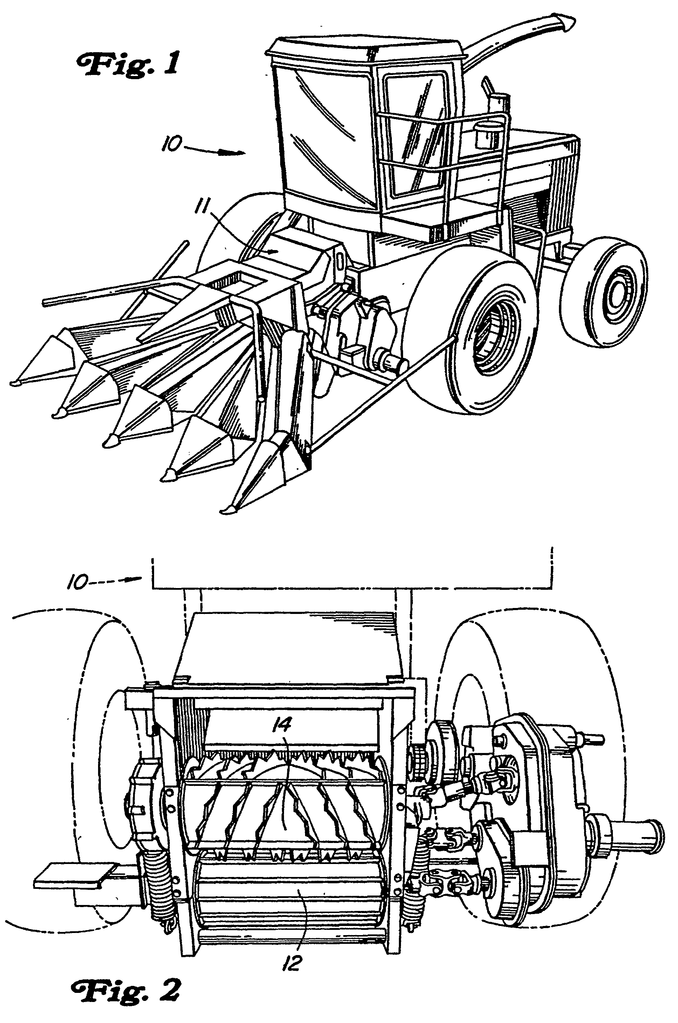

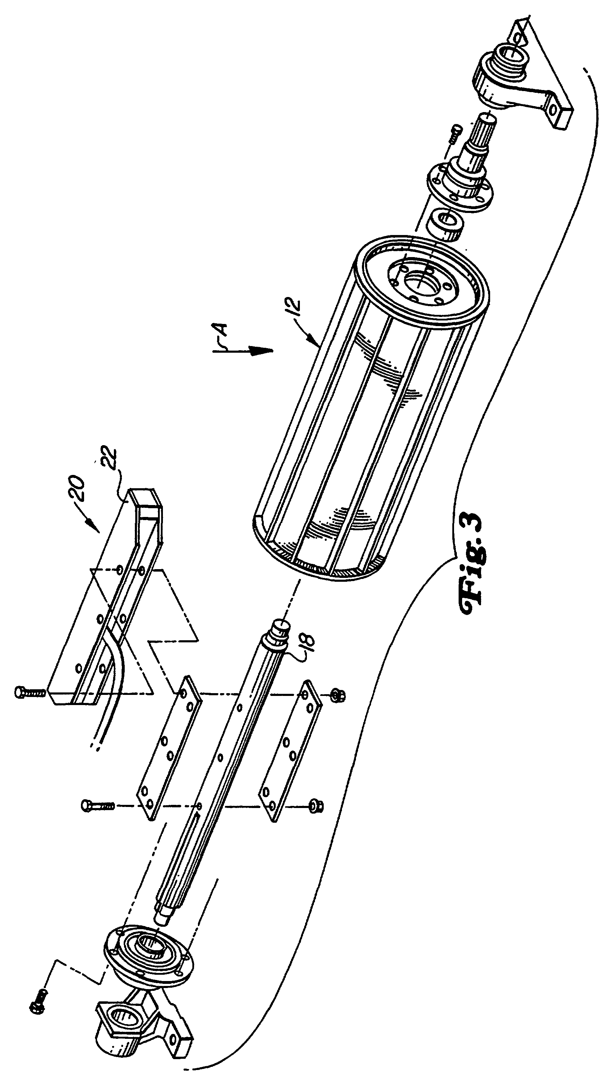

Aus den Fig. 1 und 2 geht ein Feldhäcksler 10 mit einem Zuführbereich 11 hervor, der Zuführrollen 12 und 14 enthält, die sich drehen, um Erntegut zu einer nicht gezeigten Häckseltrommel und einer nicht gezeigten Gegenschneide zu fördern. Wie am besten aus Fig. 3 ersichtlich, ist die Zuführrolle 12 drehbar um eine feststehende Welle 18 gelagert. Das Erntegut wandert über die Zuführrolle 12 in die durch den Pfeil A angezeigte Richtung, welche senkrecht zur Achse der Welle 18 liegt. Eine Metalldetektoreinheit 20 enthält ein Gehäuse 22 aus Aluminium oder einem nichtmagnetisierbaren Material, das innerhalb der Zuführrolle 12 auf der Welle 18 befestigbar ist. Eine derartige Anordnung ist als Sonderausstattung für handelsübliche Feldhäcksler verfügbar.

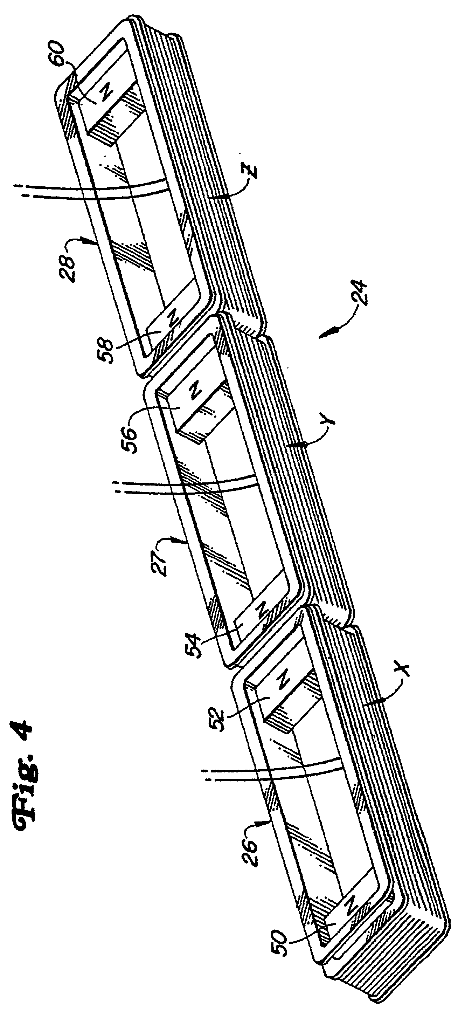

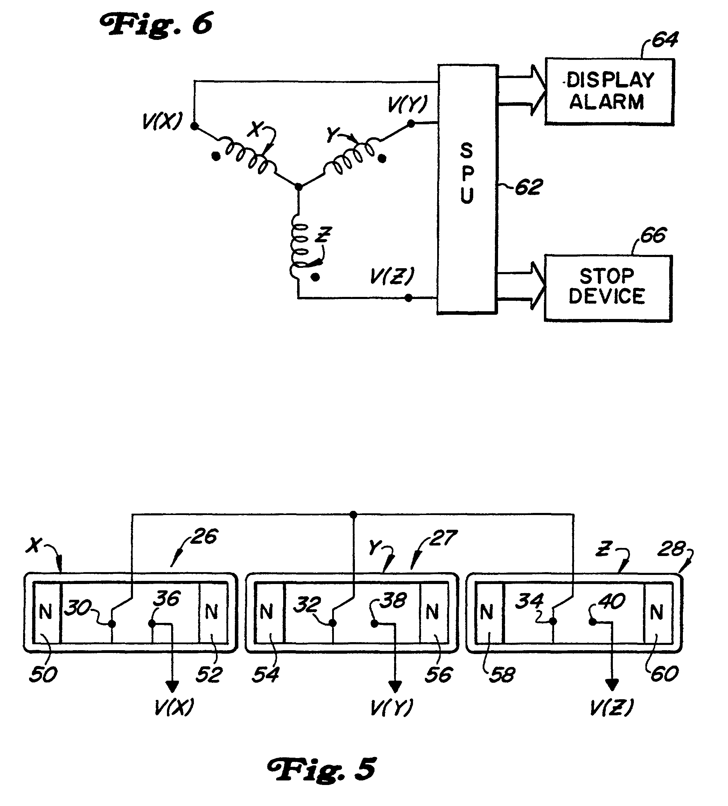

Gemäß den Fig. 4 und 5 enthält der Aufbau 24, der von dem Gehäuse 22 aufgenommen wird, vorzugsweise drei identische, im wesentlichen rechteckförmige Spulenkörper 26, 27 und 28, deren schmale Stirnseiten oder Enden einander zugewandt sind und deren lange Seiten parallel zur Drehachse der Zuführrolle 12 und quer zur Richtung des Materialflusses liegen. Um jeden Spulenkörper 26, 27 und 28 sind separate Leiter gewickelt, die drei Aufnahme- oder Abtastspulen X, Y und Z bilden, deren Spulenachsen im wesentlichen zueinander parallel liegen. Die Spulen X, Y und Z weisen gesonderte, mit einander verbundene Gemeinschaftsanschlüsse 30, 32 und 34 und gesonderte Ausgangsanschlüsse 36, 38 und 40 auf. Jeder Leiter hat zwischen seinem Gemeinschaftsanschluß und seinem Ausgangsanschluß 1000 Windungen, die gemäß Fig. 5 alle gleichsinnig im Uhrzeigersinn gewickelt sind.

Jeder Spulenkörper trägt zwei quaderförmige Stabmagnete. Beispielsweise ist innerhalb des Spulenkörpers 26 ein Paar Permanentmagnete 50 und 52 an gegenüberliegenden Enden befestigt. Ein Magnetpaar 54 und 56 ist innerhalb und an gegenüberliegenden Enden des Spulenkörpers 27 befestigt. Ein Magnetpaar 58 und 60 ist innerhalb und an gegenüberliegenden Enden des Spulenkörpers 28 befestigt. Der Aufbau 28 ist in dem Gehäuse 22 befestigt, vorzugsweise mit Epoxidharz vergossen.

Die Nordpole N aller Magnete 50 - 60 weisen in dieselbe Richtung, so daß ihre nicht gezeigten Magnetfeldlinien parallel zu den Spulenachsen liegen und gemäß Fig. 4 im wesentlichen nach oben und gemäß Fig. 5 nach oben aus der Papierebene herausweisen und die äußere Fläche der Zuführrolle 12 und die Materialstrombahn durchdringen. Durch diese Anordnung der Magnete wird das Magnetfeld an den sich gegenüberliegenden Enden jeder Spule konzentriert und in der Mitte der Spule reduziert, wobei sich ein im wesentlichen gleichförmiges Feld zwischen den Enden benachbarter Spulen ausbildet. Das Magnetfeld des Magneten 54 addiert sich teilweise zu dem Magnetfeld der- Spule 52. Das gleiche gilt für die Magnete 56 und 58. Wenn Magnete gleicher Größe oder Stärke in allen sechs dargestellten Lagen benutzt werden, sind die kombinierten Magnetfelder in der Mitte größer als die Magnetfelder an den beiden Enden der Spulenanordnung. Um dies zu korrigieren und ein gleichförmigeres Feld zu erzeugen sind der Magnet 50 an dem äußeren Ende der Spule X sowie der Magnet 60 an dem äußeren Ende der Spule Z vorzugsweise um 50% größer oder stärker als die Magnete 52 - 58.

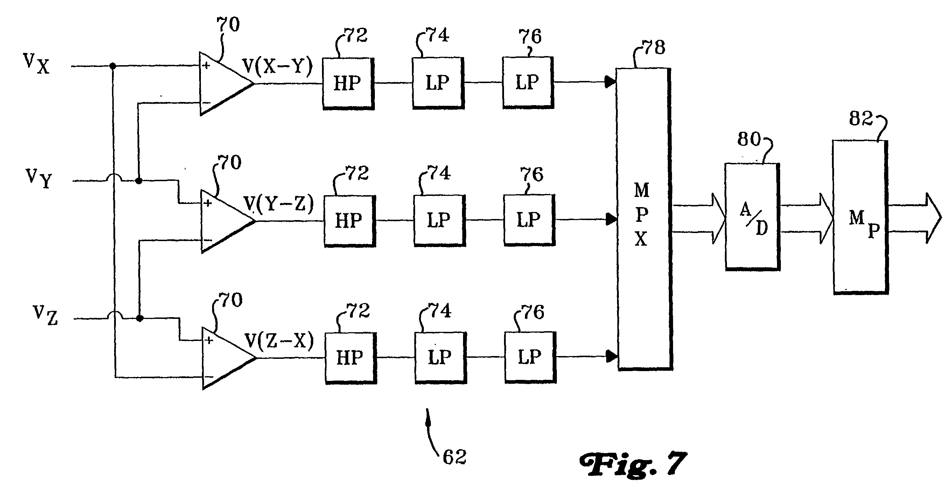

Wie aus Fig. 6 hervorgeht, sind die Spulen X, Y und Z miteinander nach Art einer Dreiphasen-Sternschaltung verbunden, d. h. jeweils ein Ende der Spulen X, Y und Z mündet an einem gemeinsamen Mittenpunkt und die jeweiligen anderen Enden der Spulen X, Y und Z stehen für die Signalverarbeitung zur Verfügung. Die Spulen X, Y und Z erzeugen an ihren Ausgangsanschlüssen 36, 38 und 40 Spannungssignale V(x), V(y) und V(z) in Abhängigkeit von Metallteilen, die die Magnetfelder der Magnete 50 - 60 durchquert, und insbesondere ferromagnetische Eigenschaften aufweisen. Diese Spannungssignale werden einer Signalverarbeitungseinheit (SPU) 62 zugeführt, welche eine Anzeige- und/oder Alarmeinheit 64 sowie eine übliche Abschaltvorrichtung 66 ansteuert, welche auslösbar ist, um die Zuführrollen 12 und 14 stillzusetzen.

Gemäß Fig. 7 enthält die Signalverarbeitungseinheit 62 drei Differentialverstärker 70 mit Verstärkungsfaktoren von ungefähr 83. Durch diese werden die Differenzsignale V(X-Y), welches eine Differenz zwischen V(x) und V(y) darstellt, V(Y-Z), welches eine Differenz zwischen V(y) und V(z) darstellt, und V(Z-X), welches eine Differenz zwischen V(z) und V(x) darstellt, gebildet. Die Ausgangssignale der Differentialverstärker 70 werden durch jeweils einen 1 Hz Hochpaßfilter 72, einen 30 Hz Tiefpaßfilter 74 mit einem Verstärkungsfaktor von ungefähr 3, und einen 35 Hz Tiefpaßfilter 76 mit einem Verstärkungsfaktor von ungefähr 6,65 weiterverarbeitet. Die Ausgangssignale der Tiefpaßfilter 76 werden durch einen Multiplexer (MPX) 78 empfangen. Ein üblicher Analog-Digital-Umformer (A/D) 80 verbindet den Multiplexer 78 mit einem üblichen Mikroprozessor (MP) 82.

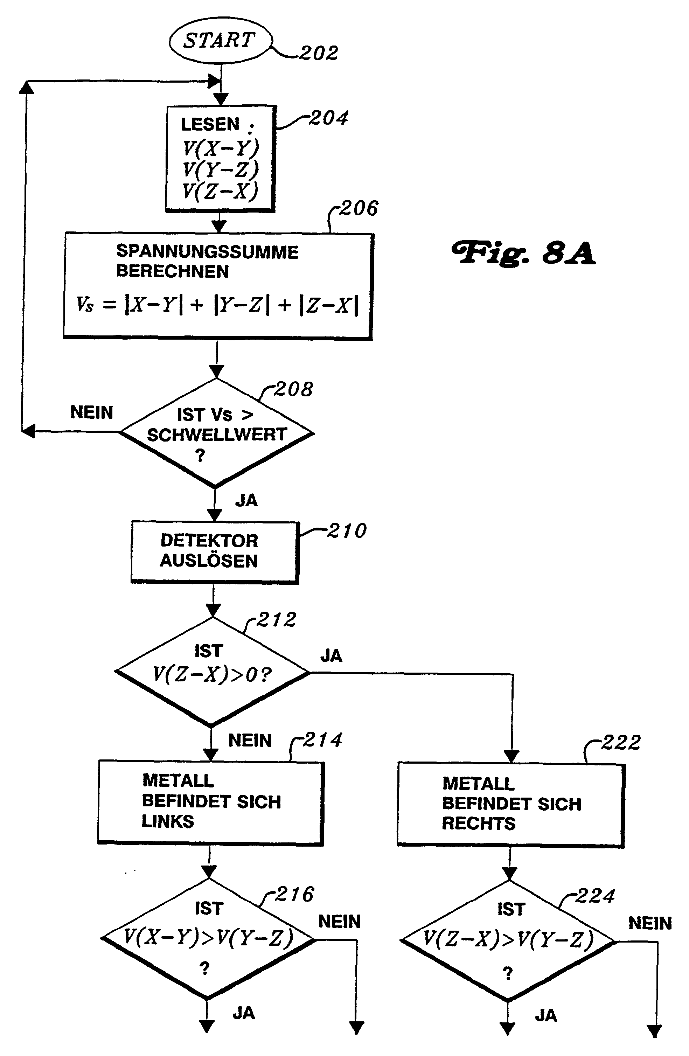

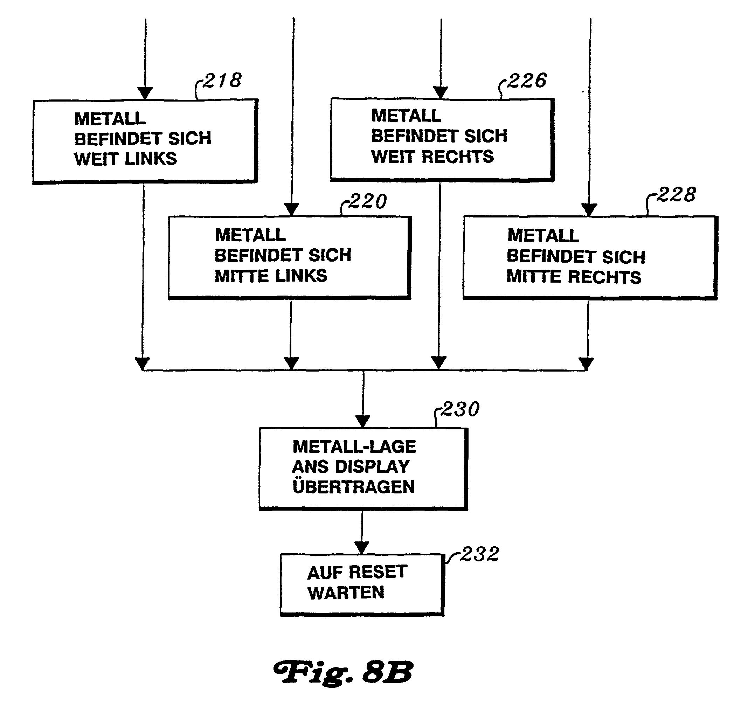

Der Mikroprozessor 82 führt einen Algorithmus 200 aus, wie er aus dem Flußdiagramm der Figuren 8a und 8b hervorgeht. Die Umwandlung des Flußdiagramms 200 in eine Programmiersprache, durch die der Algorithmus in einen digitalen Rechner oder Mikroprozessor eingegeben werden kann, stellt für einen Programmierer kein Problem dar.

Der Algorithmus beginnt mit Schritt 202. In Schritt 204 werden die Differenzspannungen V(X-Y), V(Y-Z) und V(Z-X) der Ausgangssignale der Signalverarbeitungseinheit 62 eingelesen. In Schritt 206 wird eine Spannungssumme Vs als Summe der absoluten Werte von V(X-Y), V(Y-Z) und V(Z-X) berechnet. Schritt 208 führt den Algorithmus zu Schritt 204 zurück, wenn Vs nicht größer ist als ein einstellbarer, programmierbarer Schwellwert von beispielsweise 0,7 Volt. Wenn Vs größer als der Schwellwert ist, dann wird durch Schritt 210 die Abschaltvorrichtung 66 ausgelöst. Es werden somit absolute Werte der Differenzsignale zusammengezählt und der sich ergebende Summenwert mit einem vorherbestimmbaren Grenzwert verglichen, um festzustellen, ob ein Metallstück irgendwo längs der Spulenanordnung 24 auftaucht. Ist dies der Fall wird die Abschaltvorrichtung angesteuert, um die Drehbewegung der Zuführrollen 12 und 14 zu unterbrechen.

Der Algorithmus fährt dann mit Schritt 212 weiter, in welchem V(Z-X) mit 0 Volt verglichen wird. Ist (Z-X) nicht größer als 0 Volt, dann bedeutet dies, daß Metall irgendwo in der linken Hälfte der Spulenanordnung 24 aufgetaucht ist. Schritt 214 erzeugt und speichert dann ein geeignetes Signal und der Algorithmus schreitet zu Schritt 216 fort. Ist V(Z-X) größer als 0 Volt, dann bedeutet dies, daß Metall irgendwo in der rechten Hälfte der Spulenanordnung 24 aufgetaucht ist. Schritt 222 erzeugt und speichert dann ein geeignetes Signal und der Algorithmus schreitet zu Schritt 224 fort. Durch Vergleichen des Differenzsignals V(Z-X), welches einer Differenz zwischen den Spannungen V(x) und V(z) der nicht nebeneinanderliegenden Spulen X und Z entspricht, mit Null wird in den Schritten 212, 214 und 222 somit festgestellt, daß ein Metallstück auf einer der Seiten der Spulenanordnung aufgetaucht ist. Mit anderen Worten, in den Schritten 212, 214 und 222 wird durch Vergleich des Differenzsignals, das der Differenz zwischen den Spannungen der auf gegenüberliegenden Seiten der Spulenanordnung 24 liegenden Spulen X und Z entspricht, mit einem Schwellwert festgestellt, auf welcher der beiden Seiten das Metallstück die Spulenanordnung 24 aufgetaucht ist.

Schritt 216 vergleicht V(X-Y) mit V(Y-Z). Ist.V(X-Y) größer als V(Y-Z), dann bedeutet dies, daß Metall irgendwo im weit linken Bereich der Spulenanordnung 24 nachgewiesen wurde. Schritt 218 erzeugt und speichert dann ein geeignetes Signal und der Algorithmus schreitet zu Schritt 230, durch den eine entsprechende Anzeige auf dem Display 64 veranlaßt wird. Anschließend wird in Schritt 232 der Algorithmus veranlaßt, auf ein Rückstellsignal zu warten.

Wird jedoch in Schritt 216 festgestellt, daß V(X-Y) nicht größer als V(Y-Z) ist, dann bedeutet dies, daß Metall irgendwo im linken Mittenbereich der Spulenanordnung 24 nachgewiesen wurde. Schritt 220 erzeugt und speichert dann ein geeignetes Signal und der Algorithmus schreitet zu Schritt 230, durch den eine entsprechende Anzeige auf dem Display 64 veranlaßt wird. Anschließend wird in Schritt 232 der Algorithmus veranlaßt, auf ein Rückstellsignal zu warten.

Schritt 224 vergleicht V(Z-X) mit V(Y-Z). Ist V(Z-X) größer als V(Y-Z), dann bedeutet dies, daß Metall irgendwo im weit rechten Bereich der Spulenanordnung 24 nachgewiesen wurde. Schritt 226 erzeugt und speichert dann ein geeignetes Signal und der Algorithmus schreitet zu Schritt 230, durch den eine entsprechende Anzeige auf dem Display 64 veranlaßt wird. Anschließend wird in Schritt 232 der Algorithmus veranlaßt, auf ein Rückstellsignal zu warten.

Wird jedoch in Schritt 224 festgestellt, daß V(Z-X) nicht größer als V(Y-Z) ist, dann bedeutet dies, daß Metall irgendwo im rechten Mittenbereich der Spulenanordnung 24 nachgewiesen wurde. Schritt 228 erzeugt und speichert dann ein geeignetes Signal und der Algorithmus schreitet zu Schritt 230, durch den eine entsprechende Anzeige auf dem Display 64 veranlaßt wird. Anschließend wird in Schritt 232 der Algorithmus veranlaßt, auf ein Rückstellsignal zu warten.

Damit analysiert der Algorithmus 200 die Signale der Spulen X, Y und Z und bestimmt die An- oder Abwesenheit von Metall und wenn Metall anwesend ist, bestimmt der Algorithmus 200 die ungefähre Lage des Metalls relativ zur Spulenanordnung 24.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. Beispielsweise kann eine größere Genauigkeit bei der Lokalisierung der seitlichen Lage der Metalle durch Verwendung von einer größeren Anzahl von kleineren Spulen und Magneteinheiten erreicht werden.

## Patentansprüche

1. Metalldetektor zur Erkennung von Metall im Durchflußmaterial, insbesondere rotierender Maschinenelemente (12, 14) einer Erntemaschine (10), mit einer mehrere separate Abtastspulen (X, Y, Z) enthaltenden Abtastspulenanordnung (24) zur Erzeugung elektrischer Signale bei Anwesenheit von Metallteilen im Durchflußmaterial, und mit einer die elektrischen Signale verarbeitenden Signalverarbeitungseinheit (62) , die Mittel zur Bestimmung des Bereiches der Spulenanordnung (24), der von einem Metallteil durchquert wird, enthält, **gekennzeichnet durch** Magnete (50 - 60) zur Erzeugung eines Magnetfeldes, das wenigstens teilweise in den Materialdurchflußbereich eindringt, sich **durch** die Anwesenheit von Metallteilen im Durchflußmaterial verändert und die elektrischen Signale beeinflußt, und **durch** eine Signalverarbeitungseinheit (62) mit Mitteln zur Erzeugung von Differenzsignalen, die jeweils der Spannungsdifferenz zwischen zwei zugehörigen Abtastspulen (X, Y, Z) entsprechen, sowie mit Mitteln, **durch** welche wenigstens eine Spannungsdifferenz mit einem vorgebbaren Schwellwert verglichen wird.

2. Metalldetektor nach Anspruch 1, **dadurch gekennzeichnet, daß** die Signalverarbeitungseinheit (62) von jeder der Abtastspulen (X, Y, Z) eine Spulenspannung (Vx, Vy, Vz) empfängt und daß die Signalverarbeitungseinheit (62) Mittel (70) zur Erzeugung von Differenzsignalen, die jeweils der Spannungsdifferenz zwischen zwei zugehörigen Abtastspulen (X, Y, Z) entsprechen, Mittel zur Erzeugung wenigstens eines Summensignals, das der Summe von Differenzsignalen entspricht, sowie Mittel zur Erzeugung eines Auslösesignals zum Stillsetzen rotierender Maschinenelemente (12, 14), das ausgelöst wird, wenn das Summensignal größer als ein vorgebbarer Schwellwert ist, enthält.

3. Metalldetektor nach Anspruch 2, **dadurch gekennzeichnet, daß** die Mittel zur Erzeugung des Summensignals die Summe der Absolutwerte aller Differenzsignale bilden.

4. Metalldetektor nach einem der Ansprüche 1 bis 3, **dadurch gekennzeichnet, daß** die Signalverarbeitungseinheit (62) Mittel enthält, durch die bestimmbar ist, welche Seite der Spulenanordnung (24) von einem Metallteil durchquert wird, indem das Differenzsignal von nicht nebeneinander angeordneten Abtastspulen (X, Z) mit einem vorgebbaren Schwellwert verglichen wird.

5. Metalldetektor nach einem der Ansprüche 1 bis 4, **dadurch gekennzeichnet, daß** die Signalverarbeitungseinheit (62) Mittel enthält, durch die bestimmbar ist, welche Seite der Spulenanordnung (24) von einem Metallteil durchquert wird, indem das Differenzsignal von auf entgegengesetzten Seiten der Spulenanordnung (24) angeordneten Abtastspulen (X, Z) mit einem vorgebbaren Schwellwert verglichen wird.

6. Metalldetektor nach einem der Ansprüche 1 bis 5, **dadurch gekennzeichnet, daß** die Signalverarbeitungseinheit (62) Mittel zur genauen Bestimmung des Bereichs der Spulenanordnung (24), der von einem Metallteil durchquert wird, enthält, die eine der Spannungsdifferenzen mit einer anderen Spannungsdifferenz vergleicht.

7. Metalldetektor nach einem der Ansprüche 1 bis 6, **dadurch gekennzeichnet, daß** die Spulenanordnung (24) wenigstens drei Abtastspulen (X, Y, Z) enthält.

8. Metalldetektor nach einem der Ansprüche 1 bis 7, **dadurch gekennzeichnet, daß** drei Abtastspulen (X, Y, Z) nach Art einer Dreiphasen-Sternschaltung elektrisch miteinander verbunden sind.

9. Metalldetektor nach einem der Ansprüche 1 bis 8, **dadurch gekennzeichnet, daß** die Signalverarbeitungseinheit (62) eine erste Spulenspannung V(x), eine zweite Spulenspannung V(y) und eine dritte Spulenspannung V(z) empfängt und Mittel (70) zur Erzeugung eines ersten Differenzsignals V(X-Y) aus der Differenz zwischen V(x) und V(y), eines zweiten Differenzsignals V(Y-Z) aus der Differenz zwischen V(y) und V(z) und eines dritten Differenzsignals V(Z-X) aus der Differenz zwischen V(z) und V(x) sowie Mittel zur Bestimmung des Bereichs der Spulenanordnung (24), der von einem Metallteil durchquert wird, enthält, wobei die Mittel zur Bestimmung des Bereichs wenigstens eines der Differenzsignale mit einem vorgebbaren Schwellwert sowie wenigstens ein Differenzsignal mit einem anderen Differenzsignal vergleichen.

10. Metalldetektor nach einem der Ansprüche 1 bis 9, **dadurch gekennzeichnet, daß** in wenigstens einer Abtastspule (X, Y, Z) zwei zueinander beabstandete Stabmagnete (50 - 60) hinsichtlich der Ausrichtung der Spulenanordnung (24) auf gegenüberliegenden Seiten der Abtastspule (X, Y, Z) angeordnet sind und daß die äußeren Stabmagnete (50, 60) der außenliegenden Spulen (X, Z) der Spulenanordnung (24) stärker sind als die anderen Stabmagnete (52, 54, 56, 58).

11. Metalldetektor nach Anspruch 10, **dadurch gekennzeichnet, daß** die äußeren Stabmagnete (50, 60) um etwa 50% stärker sind, als die anderen Stabmagnete (52, 54, 56, 58).

12. Metalldetektor nach einem der Ansprüche 1 bis 11, **dadurch gekennzeichnet, daß** elektrische Anschlüsse (30, 32, 34) der Abtastspulen (X, Y, Z) die gleiche Polaritäten aufweisen, miteinander elektrisch verbunden sind.

13. Metalldetektor nach einem der Ansprüche 1 bis 12, **dadurch gekennzeichnet, daß** die Spulenachsen der Abtastspulen (X, Y, Z) im wesentlichen parallel zueinander und der Richtung der Magnetfeldlinien der Magnete (50 - 60) ausgerichtet sind und daß die Abtastspulen (X, Y, Z) im wesentlichen in einer Reihe nebeneinander und quer zur Durchflußrichtung des Durchflußmaterials angeordnet sind.

## Claims

1. A metal detector for recognising metal in the through-flow material especially of rotating machine elements (12, 14) of a harvesting machine (10), with a sensing coil assembly (24) containing a plurality of separate sensing coils (X, Y, Z) for generating electric signals in the presence of metal parts in the through-flow material, and with a signal processing unit (62) which processes the electric signals and includes means of determining the region of the coil assembly (24) through which a metal part passes, **characterized by** magnets (50-60) for generating a magnetic field which penetrates at least partially into the material through-flow region, alters through the presence of metal parts in the through-flow material and affects the electric signals, and by a signal processing unit (62) with means for forming difference signals, which each correspond to the voltage difference between two associated sensing coils (X, Y, Z), as well with means through which at least one voltage difference is compared with a predetermined threshold value.

2. A metal detector according to claim 1, **characterized in that** the signal processing unit (62) receives a coil voltage (Vx, Vy, Vz) from each of the sensing coils (X, Y, Z) and **in that** the signal processing unit (62) includes means (70) for forming difference signals which each correspond to the voltage difference between two associated sensing coils (X, Y, Z), means for forming at least one sum signal which corresponds to the sum of difference signals, as well as means for generating a trigger signal for stopping rotating machine elements (12, 14), which is triggered when the sum signal is greater than a predetermined threshold value.

3. A metal detector according to claim 2, **characterized in that** the means for forming the sum signal form the sum of the absolute values of all difference signals.

4. A metal detector according to any of claims 1 to 3, **characterized in that** the signal processing unit (62) includes means through which it can be determined on which side of the coil assembly (24) a metal part passes through, **in that** the difference signal from sensing coils (X, Z) which are not arranged next to each other is compared with a predetermined threshold value.

5. A metal detector according to any of claims 1 to 4, **characterized in that** the signal processing unit (62) includes means through which it can be determined on which side of the coil assembly (24) a metal part passes through, **in that** the difference signal from sensing coils (X, Z) which are arranged on opposite sides of the coil assembly (24) is compared with a predetermined threshold value.

6. A metal detector according to any of claims 1 to 5, **characterized in that** the signal processing unit (62) includes means for precise determination of the region of the coil assembly (24) through which a metal part passes, which means compare one of the voltage differences with another voltage difference.

7. A metal detector according to any of claims 1 to 6, **characterized in that** the coil assembly (24) includes at least three sensing coils (X, Y, Z).

8. A metal detector according to any of claims 1 to 7, **characterized in that** three sensing coils (X, Y, Z) are connected together electrically in the manner of a three-phase star circuit.

9. A metal detector according to any of claims 1 to 8, **characterized in that** the signal processing unit (62) receives a first coil voltage V(x), a second coil voltage (V(y) and a third coil voltage V(z) and includes means (70) for forming a first difference signal V(X-Y) from the difference between V(x) and V(y), a second difference signal V(Y-Z) from the difference between V(y) and V(z) and a third difference signal V(Z-X) from the difference between V(z) and V(x), and also means for determining the region of the coil assembly (24) through which a metal part passes, wherein the means for determining the region compare at least one of the difference signals with a predetermined threshold value and at least one difference signal with another difference signal.

10. A metal detector according to any of claims 1 to 9, **characterized in that** two mutually spaced bar magnets (50 -60) are arranged in at least one sensing coil (X, Y, Z), on opposite sides of the sensing coil (X, Y, Z) relative to the alignment of the coil assembly (24) and **in that** the outer bar magnets (50, 60) of the outer lying coils (X, Z) of the coil assembly (24) are stronger that the other bar magnets (52, 54, 56, 58).

11. A metal detector according to claim 10, **characterized in that** the outer bar magnets (50, 60) are approximately 50% stronger than the other bar magnets (52, 54, 56, 58).

12. A metal detector according to any of claims 1 to 11, **characterized in that** electrical terminals (30, 32, 34) of the sensing coils (X, Y, Z) which have the same polarities are connected electrically to one another.

13. A metal detector according to any of claims I to 12, **characterized in that** the coil axes of the sensing coils (X, Y, Z) are aligned substantially parallel to one another and to the direction of the magnetic field lines of the magnets (50 - 60) and **in that** the sensing coils (X, Y, X) are arranged substantially in one row alongside one another and transverse to the direction of through-flow of the through-flow material.

## Revendications

1. Détecteur de métaux servant à identifier un métal dans une matière en écoulement, notamment d'organes de machine rotatifs (12,14) d'une moissonneuse (10), comportant un dispositif (24) de bobines d'exploration, qui comporte plusieurs bobines d'exploration séparées (X,Y,Z) pour produire des signaux électriques en présence de pièces métalliques dans la matière en écoulement, et comportant une unité (62) de traitement des signaux, qui traite les signaux électriques et qui comporte des moyens pour déterminer la zone du dispositif de bobines (24), qui est traversée par une pièce métallique, **caractérisé par** des aimants (50-60) servant à produire un champ magnétique, qui pénètre au moins en partie dans la zone des écoulements de la matière, varie dans le cas de la présence de pièces métalliques dans la matière en écoulement et influe sur les signaux électriques, et par une unité (62) de traitement des signaux, comportant des moyens pour produire des signaux différentiels, qui correspondent respectivement à la différence de tension entre deux bobines associées d'exploration (X,Y,Z), ainsi que des moyens, à l'aide desquels une différence de tension est comparée à une valeur de seuil pouvant être prédéterminée.

2. Détecteur de métaux selon la revendication 1, **caractérisée en ce que** l'unité (62) de traitement des signaux reçoit, de la part de chacune des bobines d'exploration (X,Y,Z), une tension de bobine (Vx, Vy, Vz), et que l'unité (62) de traitement des signaux comporte des moyens (70) pour produire des signaux différentiels, qui correspondent respectivement à la différence de tension entre deux bobines d'exploration associées (X,Y,Z), des moyens pour produire au moins un signal somme, qui correspond à la somme de signaux différentiels, ainsi que des moyens pour produire un signal de déclenchement pour arrêter des organes de machine rotatifs (12,14) et qui sont déclenchés lorsque le signal somme est supérieur à une valeur de seuil pouvant être prédéterminée.

3. Détecteur de métaux selon la revendication 2, **caractérisé en ce que** les moyens servant à produire le signal somme forment la somme des valeurs absolues de tous les signaux différentiels.

4. Détecteur de métaux selon l'une des revendications 1 à 3, **caractérisé en ce que** l'unité de traitement de signaux (62) contient des moyens, qui permettent de déterminer quel côté du dispositif de bobines (24) est traversé par une pièce métallique, par le fait que le signal différentiel est comparé par des bobines d'exploration (x,z), qui ne sont pas disposées côte-à-côte, à une valeur de seuil pouvant être prédéterminée.

5. Détecteur de métaux selon l'une des revendications 1 à 4, **caractérisé en ce que** l'unité (62) de traitement de signaux contient des moyens, à l'aide desquels on peut déterminer quel côté du dispositif de bobines (24) est traversé par une pièce métallique, par le fait que le signal différentiel de bobines d'exploration (X,Z) disposées sur des côtés opposés du dispositif de bobines (24), est comparé à une valeur de seuil pouvant être prédéterminée.

6. Détecteur de métaux selon l'une des revendications 1 à 5, **caractérisé en ce que** l'unité (62) de traitement de signaux contient des moyens qui servent à déterminer de façon précise la zone du dispositif de bobines (24), qui est traversée par une pièce métallique, et comparent l'une des différences de tension à une autre différence de tension.

7. Détecteur de métaux selon l'une des revendications 1 à 6, **caractérisé en ce que** le dispositif de bobines (24) contient au moins trois bobines d'exploration (X,Y,Z).

8. Détecteur de métaux selon l'une des revendications 1 à 7, **caractérisé en ce que** trois bobines d'exploration (X,Y,Z) sont reliées électriquement entre elles à la manière d'un circuit triphasé en étoile.

9. Détecteur de métaux selon l'une des revendications 1 à 8, **caractérisé en ce que** l'unité (62) de traitement de signaux reçoit une première tension de bobine V(x), une seconde tension de bobine V(y) et une troisième tension de bobine V(z) et des moyens (70) pour produire un premier signal différentiel V(X-Y) à partir de la différence entre V(x) et V(y), un second signal différentiel V(Y-Z) à partir de la différence entre V(y) et V(z) et d'un troisième signal différentiel V(Z-X) à partir de la différence entre V(z) et V(x) ainsi que des moyens pour déterminer la zone du dispositif de bobines (24), qui est traversée par une pièce métallique, les moyens pour déterminer la gamme d'au moins l'un des signaux différentiels comparant au moins l'un des signaux différentiels à une valeur de seuil pouvant être prédéterminée ainsi qu'au moins un signal différentiel à un autre signal différentiel.

10. Détecteur de métaux selon l'une des revendications 1 à 9, **caractérisé en ce que** dans au moins une bobine d'exploration (X,Y,Z), deux barreaux aimantés (50-60) distants l'un de l'autre sont disposés sur des côtés opposés, d'une manière rapportée à l'orientation du dispositif de bobines (24), des bobines d'exploration (X,Y,Z) et que les barreaux aimantés extérieurs (50,60) des bobines extérieures (X,Z) du dispositif de bobines (24) sont plus forts que les autres barreaux aimantés (52,54,56,58).

11. Détecteur de métaux selon la revendication 10, **caractérisé en ce que** les barreaux aimantés extérieurs (50,60) sont plus forts d'environ 50 %, que les autres barreaux magnétiques (52,54,56,58).

12. Détecteur de métaux selon l'une des revendications 1 à 11, **caractérisé en ce que** des bornes électriques (30,32,34) des bobines d'exploration (X,Y,Z), qui possèdent des polarités identiques, sont reliées entre elles électriquement.

13. Détecteur de métaux selon l'une des revendications 1 à 12, **caractérisé en ce que** les axes des bobines d'exploration (X,Y,Z) sont orientés essentiellement parallèlement entre eux et à la direction des lignes de champ magnétique des aimants (50 - 60) et que les bobines d'exploration (X,Y,Z) sont disposées essentiellement côte-à-côte suivant une rangée et transversalement par rapport à la direction de circulation du matériau en écoulement.
